# EUROPÄISCHE PATENTSCHRIFT

(11) **EP 2 867 170 B1**
(45) Veröffentlichungstag und Bekanntmachung des Hinweises auf die Patenterteilung: **16.11.2016**
(21) Anmeldenummer: 13732522.1
(22) Anmeldetag: 28.06.2013
(51) Int. Cl.: C02F 1/00, C02F 1/42, C02F 1/50, C02F 101/20

(54) **VERFAHREN ZUR AUFBEREITUNG VON TRINKWASSER**
METHOD FOR TREATING DRINKING WATER
PROCÉDÉ DE PRÉPARATION D'EAU POTABLE

(30) Priorität: 28.06.2012 DE 102012105723
(43) Veröffentlichungstag der Anmeldung: 06.05.2015
(73) Patentinhaber: BWT AG, 5310 Mondsee (AT)
(72) Erfinder: JOHANN, Jürgen, 69226 Nußloch (DE); BISSEN, Monique, 5310 Mondsee (AT)
(74) Vertreter: Blumbach Zinngrebe
(86) Internationale Anmeldenummer: PCT/EP2013/063686
(87) Internationale Veröffentlichungsnummer: WO 2014/001529

(56) Entgegenhaltungen:
- EP-A2- 2 022 760
- JP-A- 2006 231 148
- JP-A- 2012 028 159

## Beschreibung

### Gebiet der Erfindung

Die Erfindung betrifft ein Verfahren zur Aufbereitung von Trinkwasser. Eine für die Erfindung verwendete Kartusche ist insbesondere zur Verwendung mit einem schwerkraftbetriebenen Wasserhaushaltsfilter oder als Kartusche zum Einsetzen in die Zuleitung eines Gerätes zur Getränkezubereitung vorgesehen.

### Hintergrund der Erfindung

Zur Aufbereitung von Trinkwasser werden Kartuschen, insbesondere Filterkartuschen verwendet. Bei den Filterkartuschen handelt es sich zum einen um Kartuschen zur Verwendung in schwerkraftbetriebenen Wasserfiltersystemen, wie sie insbesondere im Haushalt eingesetzt werden. Die Kartusche sitzt in einem Trichter. Über einen Einlauf wird dieser Trichter mit Wasser befüllt, läuft oben in die Filterkartusche ein und verlässt durch einen unteren Auslauf die Kartusche.

Bei anderen Anwendungen, beispielsweise in der Gastronomie oder Automaten zur Heißgetränkzubereitung, werden solche Kartuschen verwendet, die entweder in ein Gerät eingesetzt werden oder mittels entsprechenden Anschlüssen in eine Trinkwasserzuleitung zwischengeschaltet werden.

Die oben beschriebenen austauschbaren Kartuschen werden in der Regel dazu verwendet, um die Wasserhärte, insbesondere die Carbonathärte des Trinkwassers zu reduzieren. Hierzu ist die Kartusche mit einem Ionenaustauschermaterial, beispielsweise mit einem schwach sauren Harz, befüllt.

Weiterhin können die Kartuschen auch die Aufgabe haben, Schwebstoffe oder Verunreinigungen wie beispielsweise Schwermetalle aus dem Trinkwasser zu entfernen. Das Filtermaterial umfasst hierbei Aktivkohle sowie ein Ionentauschermaterial. Schwermetalle, wie beispielsweise Blei, Kupfer oder Nickel werden durch Ionenaustauschprozesse entfernt.

Da die Kartuschen über einen längeren Zeitraum eingesetzt werden, kann es zu einer Verkeimung, beispielsweise durch Bakterienwachstum, kommen. Diese können an das gefilterte Trinkwasser abgegeben werden. Eine Verkeimung der Kartusche und somit auch des gefilterten Wassers kann beispielsweise durch eine teilweise Beladung der Kartusche mit antibakteriell wirksamen Substanzen verringert oder sogar vermieden werden.

Insbesondere sind solche Kartuschen bekannt, die mit Silber versetzt bzw. imprägniert sind. Silber zeigt eine antibakterielle Wirkung und kann somit einer Verkeimung entgegenwirken. Das Silber kann der Schüttung der Kartusche beispielsweise als Silberharz, Silbersalz, gesilberte Aktivkohle und/oder in partikulärer Form zugesetzt werden.

Mit Silber versetzte Kartuschen geben während der Trinkwasserfiltration an das Trinkwasser ab. Das Silber wird langsam an das Wasser abgegeben, die Silberkonzentration liegt im Bereich von 50 bis 150 ppb (Teile pro 10⁹). Das aufbereitete Trinkwasser ist nach dem Wasserfilter weitgehend frei von Schadstoffen wie zum Beispiel Blei, Kupfer, Chlor etc. enthält aber Silber, in Folge der Silberabgabe aus dem Wasserfilter.

Insbesondere nach einer Stagnationsphase, beispielsweise wenn das Wasser über Nacht im Filter verbleibt, werden Konzentration von über 200 ppb erreicht.

Eine Silberabgabe an das Trinkwasser ist dabei jedoch sowohl unter physiologischen als auch materialwissenschaftlichen Gesichtspunkten nachteilig. Das gesilberte Trinkwasser kann in nachfolgenden Geräten eine elektrochemisch galvanische Korrosion verursachen. Der Vorgang dabei ist ähnlich wie in einer Batterie. Das unedlere Metall zum Beispiel Messing, Kupfer, Eisen wirkt als Anode, das edlere Silber als Kathode, d.h. Silber scheidet sich ab und das unedlere Metall geht dabei in Lösung. Das unedlere Metall löst sich bei diesem Vorgang auf. Somit entsteht eine durch Silber ausgelöste Punktkorrosion, welche allgemein auch als Lochfrass bezeichnet wird.

Neben Korrosionseffekten, welche sich nachteilig auf die Lebensdauer der oben beschriebenen Vorrichtungen auswirken, können dadurch auch Materialbestandteile von Leitungen und Gerätekomponenten in Lösung gehen und in das Trinkwasser gelangen. So kann es zu einer Abgabe von Blei, Nickel oder Kupfer an das Trinkwasser kommen.

Das Dokument JP 2006 231148 A zeigt eine antibakteriell ausgerüstete Kartusche zur Trinkwasseraufbereitung, welche eine Schicht umfasst, die Silber an das Wasser abgibt, wobei das Wasser sodann durch eine silberabsorbierende Schicht geleitet wird.

### Aufgabe der Erfindung

Der Erfindung liegt demgegenüber die Aufgabe zu Grunde, bekannte Kartuschen zur Trinkwasseraufbereitung weiter zu verbessern. Insbesondere soll eine Kartusche bereit gestellt werden, welche eine antibakterielle Wirkung zeigt, ohne die Konzentration an Silber im gefilterten Trinkwasser stark zu erhöhen.

### Zusammenfassung der Erfindung

Die Aufgabe der Erfindung wird bereits durch ein Verfahren zur Aufbereitung von Trinkwasser nach Anspruch 1 gelöst. Bevorzugte Ausführungsformen und Weiterbildungen der Erfindung sind den Unteransprüchen zu entnehmen.

Offenbart wird eine Kartusche für einen Filter zur Aufbereitung von Trinkwasser sowohl bei schwerkraftbetriebenen, als auch bei druckbetriebenen Filtern.

In schwerkraftbetriebenen Wasserfiltern wird die Kartusche zur Wasseraufbereitung in der Regel in einem Trichter angeordnet, in den das zu filternde Wasser eingegossen wird.

Eine entsprechende Kartusche umfasst in der Regel ein Gehäuse mit einem Einlauf und einem Auslauf. Vor dem Auslauf befindet sich vorzugsweise ein Vlies. Ein- und Auslauf können dabei beispielsweise als Schlitze oder Gitterstruktur ausgebildet sein.

Des Weiteren werden Kartuschen zur Verwendung in Geräten zur Getränkezubereitung offenbart. Hier kann die Kartusche im Gerät, oder vor dem Gerät zum Beispiel einer Kaffeemaschine, beispielsweise im Zulauf des Gerätes oder im Auslauf eines Wasserreservoirs sitzen.

Weiterhin werden Filter offenbart, welche insbesondere in einem Wasserreservoir, zum Beispiel im Wassertank einer Kaffeemaschine, angeordnet sind. Bei letzteren Wasserfiltern wird das Wasser aus dem Wassertank durch die Kartusche durchgesaugt.

Die Kartusche umfasst ein antibakterielles, silberhaltiges Ionenaustauschermaterial sowie ein Mittel zur Entfernung von Silber aus dem Trinkwasser, wobei das Trinkwasser zunächst durch das Silber umfassende Ionenaustauschermaterial fließt und nachfolgend mit dem Mittel zur Silberentfernung behandelt wird.

Es ist bekannt, dass es in feuchten Kartuschen ohne antibakterielle Ausrüstung insbesondere mit steigender Verwendungsdauer der Kartusche zu einer vermehrte Bakterienkonzentration, sprich zu einem Bakterienwachstum, kommen kann.

Die Silberung der Schüttung kann beispielsweise mit Silberharz (z. B. Purolite C 150 Ag), mit gesilberter Aktivkohle (z. B. Eurocarb YAO 15x50, 0,05 Ag), mit einem mit Silber beladenen Ionenaustauscher oder auch mit einem metallischen Silber (z.B. einem mit Silber beschichteten Metallgitter) erfolgen.

Die Kartusche zur Wasseraufbereitung zeigt dagegen auf Grund seines Silbergehaltes eine antibakterielle Wirkung, d.h. das Bakterienwachstum in der Kartusche wird durch Abgabe von Silber an das Trinkwasser gehemmt. Weiterhin umfasst die Kartusche ein Mittel zur Silberentfernung, im Folgenden auch als Silbersorbens bezeichnet, welches Silber aus dem Trinkwasser entfernt.

Die Kartusche ist dabei derart aufgebaut, dass das zuvor durch das silberhaltige Ionenaustauschermaterial geleitete und mit Silber angereicherte Trinkwasser vor dem Ausströmen aus der Kartusche mit dem Silbersorbens in Kontakt gebracht wird. Durch den erfindungsgemäßen Aufbau ist es somit möglich, eine antibakteriell ausgerüstete Kartusche bereitzustellen ohne die Wasserqualität durch Abgabe von Kartuschenbestandteilen zu beeinträchtigen.
Vielmehr ist das verwendete Silbersorbens vorzugsweise derart ausgebildet, dass auch die Konzentration an weiteren Schwermetallen, wie zum Beispiel Blei, Kupfer, Cadmium, Zink aktiv gesenkt und so die Wasserqualität verbessert wird. Das aus der Kartusche ablaufende Trinkwasser ist somit nahezu frei von Silber und dadurch hygienisch sauber, physiologisch wertvoller, und verursacht keine durch Silber ausgelöste Korrosion in nachfolgenden Geräten.

Durch die Ausführung des Wasserfilters werden die Schadstoffe aus dem Trinkwasser entfernt, das Trinkwasser im Wasserfilter wird gesilbert und somit das Bakterienwachstum gehemmt. Das aus dem Wasserfilter ablaufende Trinkwasser ist jedoch nahezu frei von Silber.

Es ist erfindungsgemäß vorgesehen, dass das Silbersorbens in Form eines Vlieses, insbesondere in Form eines Ionenaustauschervlieses ausgebildet ist. Dabei hat sich die Verwendung eines Trägermaterials als besonders vorteilhaft herausgestellt. Gemäß einer Ausführungsform beträgt der mittlere Durchmesser der Fasern 5 bis 30 Mikrometer, bevorzugt 10 bis 20 Mikrometer.

Die Ausbildung des Silbersorbens in Form eines Ionenaustauschervlieses, insbesondere mit den oben genannten Faserdurchmessern, ist gegenüber einem Granulat vorteilhaft, da im Falle eines Vlieses, dieses eine wesentlich größere spezifische Oberfläche im zu einem Granulat hat, und sich dadurch eine bessere Kinetik, zur Adsorption des Silbers aus dem Trinkwasser ergibt.

Das Vlies kann, wie es bei einer Ausführungsform der Erfindung vorgesehen ist, mehrlagig ausgebildet sein. So können verschiedene Vlieslagen übereinander in den Ablauf der Filterkartusche eingelegt werden. Es ist insbesondere denkbar, eine Lage eines Vlieses mit hoher Kapazität zur Entfernung von Silberionen über eine weitere Lage zu legen, deren Selektivität gegenüber Silberionen höher ist.

Des Weiteren ist durch das große Porenvolumen ein hoher Durchlauf möglich. Dies ist insbesondere bei der Verwendung in Geräten zur Heißgetränkezubereitung wie in Kaffeemaschinen, bei denen hohe Durchsätze benötigt werden, vorteilhaft.

Gemäß der Erfindung umfasst das Vlies Polyacrylatfasern. Insbesondere umfasst das Vlies Fasern aus modifiziertem Polyacrylnitril. Diese Fasern können dabei Silber wie auch andere Schwermetalle adsorbieren und somit dem Trinkwasser entziehen.
Gemäß einer Ausführungsform erfolgt durch die Modifizierung die Einführung zumindest einer funktionellen Gruppe, mit welcher Silber und/oder Silberionen komplexiert werden können.

Durch das vliesförmige Silbersorbens sowie der erfindungsgemäßen Anordnung von silberhaltigem Ionentauscher und des Vlieses ist es möglich, maximale Silberkonzentrationen im gefilterten Trinkwasser von weniger als 100 Mikrogramm/l, bevorzugt von weniger als 80 Mikrogramm/l und besonders bevorzugt von 10 Mikrogramm/l bei einer gleichzeitigen antibakteriellen Ausrüstung der Kartusche zu erhalten.

Dagegen kann mit den aus dem Stand der Technik bekannten Verfahren zur Entfernung von Silber aus dem Trinkwasser, beispielsweise durch Fällungsreaktionen, Elektrolyse oder Verwendung spezieller Ionenaustauscher die Silberkonzentration lediglich auf ca. 100 Mikrogramm/l reduziert werden.

Ein weiterer Vorteil des erfindungsgemäßen Verfahrens liegt in dem kompakten, einfachen Aufbau. So kann das Silbersorbens in die Kartusche integriert werden, während die bisher bekannten Methoden sowohl zusätzliche Verfahrensschritte wie auch teils aufwendige Vorrichtungen (z.B. bei der Elektrolyse) benötigen.

Die Erfindung betrifft ein Verfahren zur Aufbereitung von Trinkwasser, insbesondere mittels der zuvor beschriebenen Kartusche.

Das Trinkwasser wird in der Kartusche über ein Ionenaustauschermaterial geleitet, welches zumindest teilweise mit Silber versetzt ist. Dabei wird das antibakteriell wirkende Silber an das Trinkwasser abgegeben, was zu einer Konservierung des in der Kartusche befindlichen Materials bzw. des Wassers führt. Nachfolgend strömt das Trinkwasser über ein Silbersorbens. Das Silbersorbens führt zu einer Komplexierung des Silbers, so dass das Trinkwasser nach dem Ausströmen aus der Kartusche einen maximalen Silbergehalt von kleiner 30 Mikrogramm/l, bevorzugt von maximal 10 Mikrogramm/l aufweist, wohingegen Silberanteil im Bereich des Ionenaustauschermaterials über 200 Mikrogramm/l betragen kann.

Als sog. Silbersorbens wird gemäß der Erfindung ein faserförmig ausgebildetes, modifiziertes Polyacrylat bereit gestellt, welches durch die Modifikation aktive Gruppen zur Komplexierung des Silbers enthält. Das Silber wird in erster Linie durch Komplexierung von elementarem Silber und teilweise auch in ionischer Form bzw. als Ionenpaar aus dem Wasser entfernt.

Die stets im Trinkwasser vorhandenden Chloridionen können dabei mit Silber unlösliche Kolloide bilden. Auch wenn die Silberchloridkonzentration so gering ist, daß das Löslichkeitsprodukt des Silberchlorids nicht überschritten wird, so dass das Silber nicht als Silberchlorid ausfällt, ist es im Wasser als neutrales Ionenpaar [Ag⁺Cl⁻] vorhanden. Weder das kolloidale Silber noch das neutrale Ionenpaar lassen sich mit einem konventionellen Ionenaustauscher entfernen.
Gemäß einer vorteilhaften Weiterbildung der Erfindung besteht das Silbersorbens aus einem modifizierten Polyacrylnitril.

Das Silbersorbens ist dabei vorzugsweise polyfunktional, d.h. es enthält neben Carboxlygruppen weitere aktive Gruppen welche starke Komplexe mit dem als Silberchlorid vorliegenden Silber eingehen. Insbesondere handelt es bei den weiteren aktiven Gruppen um schwefelhaltige Gruppen. Schwefelhaltige Gruppen bilden dabei besonders stabile Komplexe mit Silber. Abhängig von der jeweiligen schwefelhaltigen Gruppe kann mit Silber ein stabiler Komplex erhalten werden, dessen Komplexierungsgleichgewicht stark auf der Seite des Komplexes liegt. Somit ist die maximale Konzentration an freiem Silber sehr gering. Insbesondere die Einführung von funktionellen Gruppen, welche am gleichen Kohlenstoffatom eine Schwefel und eine Aminofunktion aufweisen, hat sich als besonders vorteilhaft herausgestellt. Hierbei kann die komplexierende Wirkung des Schwefels durch die Aminogruppen noch verstärkt werden. Bevorzugt weist das Silbersorbens als aktive Gruppen Thioamidgruppen oder 1-Aminothiole auf.

Somit ist das Silbersorbens in der Lage, Silber in ionischer und unpolarer Form, d.h. als Silberkation, neutrales Silber oder neutrales Ionenpaar aus dem Trinkwasser zu entfernen. Durch den Einsatz des erfindungsgemäßen Silbersorbens kann somit das Silber im Trinkwasser weitgehend entfernt werden.

### Beschreibung der Zeichnungen

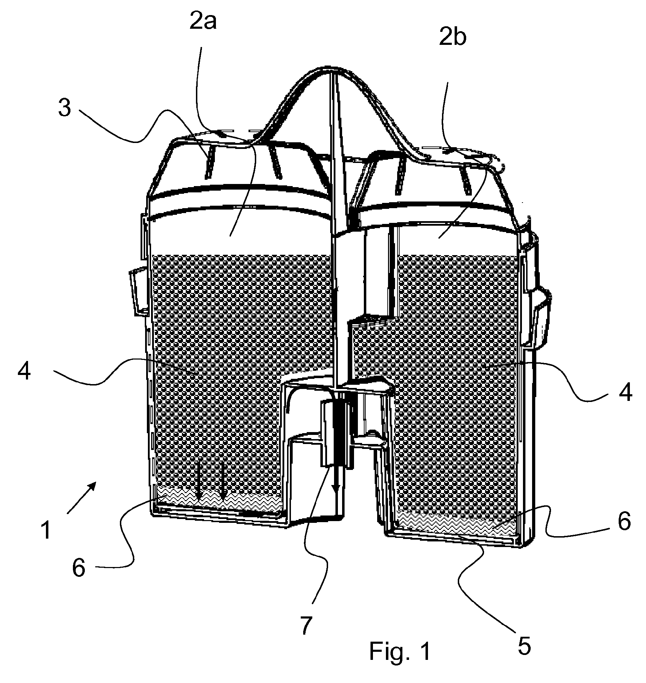

Die Erfindung soll im Folgenden bezugnehmend auf die Zeichnungen Fig. 1 bis Fig. 4 näher erläutert werden.

Fig. 1 zeigt eine Schnittansicht einer Kartusche für einen schwerkraftbetriebenen Wasserhaushaltsfilter, wie diese beispielsweise in einen Trichter eingesetzt werden kann.

In diesem Ausführungsbeispiel handelt es sich um eine Kartusche 1, mit einem Einlauf 3 und einer Kammer 2a, 2b, welche mit einem silberhaltigem, antibakteriellem Ionenaustauschermaterial 4 gefüllt ist. Die Kammer 2 ist in beiden nebeneinander angeordneten Segmenten 2a und 2b unterteilt.

Das Ionenaustauschermaterial 4 liegt dabei als Granulat vor. Am Kartuschenboden 5 befindet sich ein Vlies 6, welches aus einem vliesförmigen Silbersorbens besteht. Es handelt sind bei diesem Ausführungsbeispiel um eine Kartusche mit einem Saugheber als Auslauf 7. Das Vlies 6 ist in die beiden Teile der Kammer 2a, 2b eingelegt.

Bei der Aufbereitung des Trinkwassers läuft das Wasser durch den Einlauf 3 in die Kammer 2 und wird über das Ionenaustauschermaterial 4 geleitet. Hier erfolgt die Aufbereitung des Trinkwassers durch Ionenaustauschprozesse, beispielsweise zur Wasserenthärtung. Gleichzeitig gibt das Ionenaustauschermaterial 4 Silber an das Wasser ab. Anschließend wird das Wasser über das Vlies 6 geleitet. Durch den Kontakt mit dem Silbersorbens wird das im Wasser enthaltende Silber im Vlies 6 gebunden. Nach dem Durchströmen des Vlieses 6 verlässt das aufbereitete Wasser über den als Saugheber ausgebildeten Auslauf 7 die Kartusche.

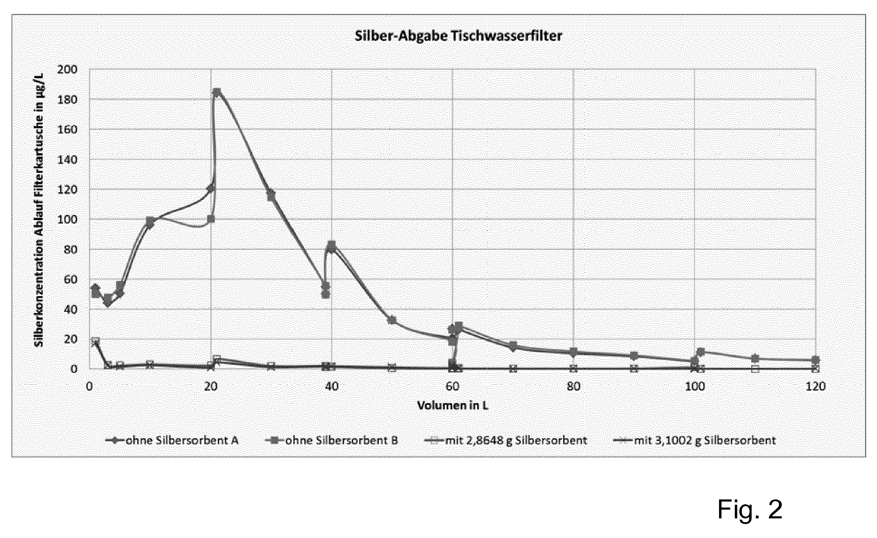

Fig. 2 zeigt die Silberkonzentrationen im Ablauf einer konventionellen silberhaltigen Filterkartusche sowie einer erfindungsgemäßen Kartusche in Abhängigkeit vom gefilterten Wasservolumen.

Die Silberkonzentration im Ablauf einer konventionellen silberhaltigen Kartusche steigt nach einem Anfangswert von ca. 50 Mikrogramm/l innerhalb der ersten 20 Liter auf bis zu 180 Mikrogramm/l an. Anschließend sinkt die Silberkonzentration im Laufe der nächsten 20 l auf ca. 60 Mikrogramm/l. Nach insgesamt 40 l steigt die Konzentration zunächst wieder auf 80 Mikrogramm/l an. Nach einem gefilterten Gesamtvolumen von 60 l beträgt die Silberkonzentration ca. 20 Mikrogramm/l.
Fig. 2 zeigt deutlich, dass bei der Verwendung von konventionellen silberhaltigen Kartuschen insbesondere innerhalb der ersten 40 l Wasser die Silberkonzentration stets über 50 Mikrogramm/l beträgt. Dabei werden Spitzenkonzentrationen von bis zu 180 Mikrogramm/l erreicht. Diese hohen Konzentrationen sind unter physiologischen Aspekten bedenklich. Zudem begünstigen derart hohe Silberkonzentrationen die Korrosion metallischer Werkstoffe und begünstigen Lochfraß durch Redoxprozesse.

Im Unterschied dazu beträgt die maximale Silberkonzentration bei der Verwendung einer erfindungsgemäßen Kartusche 20 Mikrogramm/l. Dieser Maximalwert wird zu Beginn der Filtration erreicht und fällt innerhalb eines Volumens von wenigen Litern schnell auf unter 5 Mikrogramm/l. Diese geringe Silberkonzentration steigt auch nach einem Gesamtvolumen von 120 l gefiltertem Wasser nicht weiter an. Die erfindungsgemäße Kartusche gewährleistet somit über einen langen Anwendungszeitraum eine antibakterielle Wirkung bei einer gleichbleibend niedrigen Silberkonzentration im so aufbereitetem Wasser.

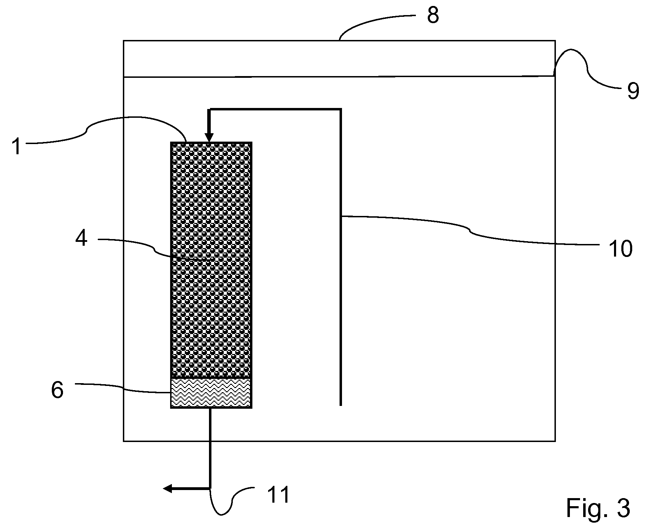

Fig. 3 zeigt eine Schnittansicht eines Wassertanks 8 mit eingebauter erfindungsgemäßer Kartusche 1. Die erfindungsgemäße Kartusche 1 sitzt am Boden des Wassertanks 8. Das Wasser gelangt über den Zulauf 10 in die Kartusche 1. Die Pfeile stellen dabei die Flußrichtung des Wassers dar. Der Zulauf 10 saugt dabei das Wasser vom Boden bzw. Bodenbereich des Wassertanks 8 an. Nachfolgend wird das Wasser über das Ionentauschermaterial 4 und anschließend über das Silbersorbens 6, welches sich am Boden der Kartusche 1 befindet, geleitet und aufbereitet, bevor es durch den Ablauf 11 Kartusche 1 und Wassertank 8 verlässt.

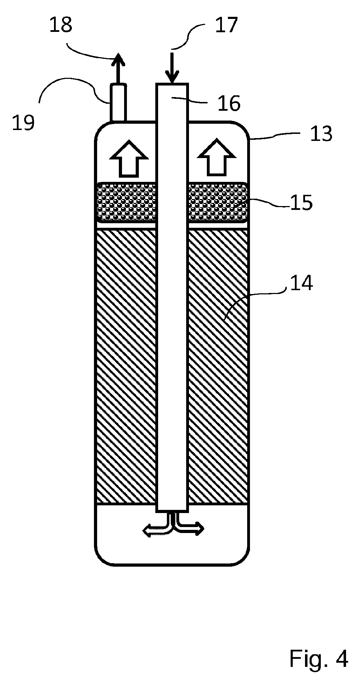

Fig. 4 zeigt einen druckbetriebenen Wasserfilter 13, welcher zum Beispiel in die Zulaufleitung einer Kaffeemaschine eingesetzt wird. Das Wasser strömt durch den Zulauf 17 über das Zulaufrohr 16 in den Wasserfilter.

Anschließend läuft das Wasser die Ionenaustauscher bzw. Aktivkohleschüttung 14. Vor dem Ablauf aus dem Filter wird das Wasser über das Silbersorbent 15 geleitet. Das aufbereitete, d.h. weitgehend silberfreie Wasser 18 verlässt den Wasserfilter 13 durch den Ablauf 19.

### Bezugszeichenliste:

- 1: Kartusche
- 2: Kammer
- 3: Einlauf
- 4: Ionentauschermaterial
- 5: Kartuschenboden
- 6: Vlies
- 7: Auslauf
- 8: Wassertank
- 9: Wasserspiegel
- 10: Zulauf
- 11: Ablauf
- 12: Auslauf
- 13: Druckbehälter
- 14: Ionenaustaustauscher/Aktivkohleschüttung
- 15: Silbersorbens
- 16: Zulaufrohr
- 17: Zulauf
- 18: aufbereitetes Wasser
- 19: Ablauf

## Patentansprüche

1. Verfahren zur Aufbereitung von Trinkwasser, wobei das Trinkwasser zunächst über ein Ionenaustauschermaterial (4), welches Silber umfasst und eine antibakterielle Wirkung aufweist und nachfolgend über Mittel zur Silberentfernung (15) geleitet wird,
wobei über das Mittel zur Silberentfernung (15) ein faserförmig ausgebildetes modifiziertes Polyacrylat verwendet wird, welches zumindest eine schwefelhaltige funktionelle Gruppe zur Komplexierung des Silbers umfasst und Silber sowohl in ionischer als auch in unpolarer Form entfernt wird.

2. Verfahren nach dem vorstehenden Anspruch, wobei ein Mittel zur Silberentfernung (15) verwendet wird, welches als aktive Gruppen zur Komplexierung von Silber schwefelhaltige funktionelle Gruppen Thioamide und/oder Aminothiole enthält.

3. Verfahren zur Aufbereitung von Trinkwasser einem der vorstehenden Ansprüche, **dadurch gekennzeichnet, dass** im Bereich des Ionenaustauschermaterials (4) dem Trinkwasser über 200 ppb Silber zugesetzt werden und durch die Mittel zur Silberentfernung die Konzentration an Silber auf unter 80 ppb reduziert wird.

4. Verfahren zur Aufbereitung von Trinkwasser nach einem der vorstehenden Ansprüche, wobei die schwefelhaltige funktionelle Gruppe eine funktionelle Gruppe ist, bei welcher der Schwefel an ein Kohlenstoffatom gebunden ist, welches eine Aminogruppe aufweist.

5. Verfahren zur Aufbereitung von Trinkwasser nach dem vorstehenden Anspruch, wobei die schwefelhaltige funktionelle Gruppe ein Thioamid oder ein 1-Aminothiol ist.

6. Verfahren zur Aufbereitung von Trinkwasser einem der vorstehenden Ansprüche, wobei als Mittel zur Silberentfernung ein Vlies (6) verwendet wird, welches eine Faserdicke von 10 bis 20 Mikrometer aufweist.

7. Verfahren zur Aufbereitung von Trinkwasser einem der vorstehenden Ansprüche, wobei die Silberkonzentration des gefilterten Trinkwassers weniger als 100 Mikrogramm/l, bevorzugt weniger als 80 Mikrogramm/l und besonders bevorzugt weniger als 50 Mikrogramm/l beträgt.

## Claims

1. A method for treating drinking water, wherein the drinking water is first passed through an ion-exchange material (4) which comprises silver and has an antibacterial effect, and is subsequently passed through a means for removing silver (15), wherein a means for removing silver (15) is used which is a fibrous modified polyacrylate comprising at least one sulfur-containing functional group for complexing silver and wherein silver is removed in ionic as well as in non-polar form.

2. The method for treating drinking water as claimed in the preceding claim, wherein a means for removing silver (15) is used which comprises as active groups for complexing silver sulfur-containing functional groups, thioamides and/or aminothiols.

3. The method for treating drinking water as claimed in the preceding claims, wherein in the area of the ion-exchange material (4), more than 200 ppb silver are added to the drinking water, and wherein the concentration of silver is reduced to less than 80 ppb by the means for removing silver.

4. The method for treating drinking water as claimed in the preceding claims, wherein the sulfur-containing functional group is a functional group in which the sulfur is bound to a carbon atom which has an amino group.

5. The method for treating drinking water as claimed in the preceding claims, wherein the sulfur-containing functional group is a thioamide or a 1-aminothiol.

6. The method for treating drinking water as claimed in the preceding claims, wherein a fleece (6) is used as means for removing silver, wherein the fleece fibers have a diameter of 10 to 20 microns.

7. The method for treating drinking water as claimed in the preceding claims, wherein the silver concentration in the filtered drinking water is less than 100 micrograms per liter, preferably less than 80 micrograms per liter, and more preferably less than 50 micrograms per liter.

## Revendications

1. Procédé de traitement de l'eau potable, dans lequel l'eau potable est d'abord conduite au-dessus d'une matière échangeuse d'ions (4), qui comprend de l'argent et présente une action antibactérienne, et par la suite au-dessus d'un agent destiné à l'élimination de l'argent (15),
dans lequel, au-dessus de l'agent destiné à l'élimination de l'argent (15), un polyacrylate modifié conçu sous la forme d'une fibre est utilisé, qui comprend au moins un groupe fonctionnel soufré pour la complexation de l'argent, et l'argent aussi bien sous forme ionique que non polaire est éliminé.

2. Procédé selon la revendication précédente, dans lequel un agent destiné à l'élimination de l'argent (15) est utilisé, qui contient des groupes fonctionnels soufrés thioamides et/ou aminothiols comme groupes actifs pour la complexation de l'argent.

3. Procédé de traitement de l'eau potable selon l'une des revendications précédentes, **caractérisé en ce que**, dans la zone de la matière échangeuse d'ions (4), l'eau potable est additionnée de 200 ppb d'argent et la concentration en argent est réduite à 80 ppb grâce aux agents destinés à l'élimination de l'argent.

4. Procédé de traitement de l'eau potable selon l'une des revendications précédentes, dans lequel le groupe fonctionnel soufré est un groupe fonctionnel dans lequel le soufre est lié à un atome de carbone présentant un groupe amino.

5. Procédé de traitement de l'eau potable selon la revendication précédente, dans lequel le groupe fonctionnel soufré est un thioamide ou un 1-aminothiol.

6. Procédé de traitement de l'eau potable selon l'une des revendications précédentes, dans lequel un voile (6) qui présente une épaisseur de fibres de 10 à 20 micromètres est utilisé comme agent destiné à l'élimination de l'argent.

7. Procédé de traitement de l'eau potable selon l'une des revendications précédentes, dans lequel la concentration en argent de l'eau potable filtrée est inférieure à 100 microgrammes/litre, de préférence inférieure à 80 microgrammes/litre et particulièrement de préférence inférieure à 50 microgrammes/litre.
